# EUROPÄISCHE PATENTSCHRIFT

(11) **EP 1 600 052 B1**
(45) Veröffentlichungstag und Bekanntmachung des Hinweises auf die Patenterteilung: **31.10.2007**
(21) Anmeldenummer: 05009622.1
(22) Anmeldetag: 02.05.2005
(51) Int. Cl.: A01D 78/10

(54) **Geschleppter Kreiselschwader**
Towed rotary swather
Andaineuse rotative remorquée

(30) Priorität: 28.05.2004 DE 202004008500 U
(43) Veröffentlichungstag der Anmeldung: 30.11.2005
(73) Patentinhaber: Kverneland Group Gottmadingen GmbH & Co. KG, 78244 Gottmadingen (DE)
(72) Erfinder: Eder, Josef, 94491 Hengersberg (DE)
(74) Vertreter: Grünecker, Kinkeldey, Stockmair & Schwanhäusser Anwaltssozietät

(56) Entgegenhaltungen:
- EP-A- 0 845 199
- EP-A- 0 876 751
- EP-A- 0 950 347
- EP-A- 1 060 651
- EP-A- 1 145 620
- DE-U- 8 908 404

## Beschreibung

Die Erfindung betrifft einen geschleppten Kreiselschwader gemäß Oberbegriff des Anspruchs 1.

Bei einem aus DE 89 08 404 U bekannten, geschleppten Kreiselschwader dieser Art sind die Laufräder nur des zweiten Rechkreisels mit ihrem Fahrgestell gegenüber dem Zugbalken des zweiten Rechkreisels aus der Transportposition in mindestens eine seitlich versetzte Arbeitsposition lenkbar und mittels eines am Zugbalken und am Fahrgestell angreifenden Verstellmittels feststellbar. Hingegen wird der erste Rechkreisel mit dem Hauptzugbalken im Wesentlichen in Richtung der Längsmittelebene des Traktors auf seinen Laufrädern so geschleppt, dass seine Zinkenumlaufbahn beiderseits über die Traktorradspuren nach außen greift. In der Transportposition läuft der zweite Rechkreisel dem ersten in Richtung der Längsmittelachse des Traktors nach. In einer Vollschwad-Arbeitsstellung ist der zweite Rechkreisel gegenüber dem ersten Rechkreisel seitlich auf die Seite versetzt, zu der der erste Rechkreisel das Erntegut fördert. In einer Einzelschwad-Arbeitsposition ist hingegen der zweite Rechkreisel gegenüber dem ersten Rechkreisel seitlich zu der Seite versetzt, die der Seite abgewandt ist, auf die der erste Rechkreisel das Erntegut fördert. Auf diese Weise werden zwei Einzelschwade gelegt, die man z. B. als Nachtschwade oder bei starkem Emtegutanfall für eine kleine Presse bildet. Die jeweilige Versetzung des zweiten Rechkreisels wird durch eine entsprechende Verdrehung des Fahrwerks relativ zum Zugbalken des zweiten Rechkreisels eingestellt. Zwei Einzelschwaden sind weniger ökonomisch für die weitere Verarbeitung, z.B. durch eine Ballenpresse, einen Häcksler oder dgl., als ein Doppelschwad oder zwei neben- oder übereinandergelegte Doppelschwade. Da in beiden Arbeitspositionen der Traktor mit seinen Rädern im auf dem Feld liegenden Erntegut fährt, kann das Erntegut in den gegebenenfalls weichen Boden gedrückt werden, was einer effizienten Recharbeit abträglich ist und zur Verschmutzung des Ernteguts mit Erdreich führt. Da der Zugbalken im Hinblick auf eine kurze Transportlänge und gute Manövrierbarkeit nur so lang wie nötig ist, formt der hintere Rechkreisel in der Einzelschwad-Position einen schmäleren Einzelschwad als der erste Rechkreisel (beschränkte Arbeitsbreite).

Bei einem anderen geschleppten Kreiselschwader dieser Art (EP 0 950 347 A) ist zwar der Zugpunkt für den Zugbalken des zweiten Rechkreisels optimal weit vorne positioniert, um günstige Abknickwinkel im Gelenkwellenstrang zu erzielen und die Reaktionskräfte zu minimieren, die von den Fahrwerken erzeugt werden. Da jedoch der erste Rechkreisel in jeder Arbeitsposition im Wesentlichen in Verlängerung der Längsmittelachse des Traktors geschleppt wird, fährt der Traktor im Erntegut. Ferner ist es schwierig, am Feldrand sauber zu rechen, falls in diesem Bereich Bodenunregelmäßigkeiten oder Bäume vorhanden sind, weil der Traktor und/oder die Traktorkabine gefährdet ist und gegebenenfalls der Traktor nicht weit genug an den Feldrand heranzufahren vermag. In der Einzelschwad-Position ist der Einzelschwad des zweiten Rechkreisels schmäler als des des ersten Rechkreisels, weil trotz des weit vorne platzierten Zugpunkts eine Überlappung der Rechbahnen verbleibt.

Weiterer Stand der Technik ist enthalten in EP 1 145 620 A, EP 1 060 651 A, EP 0 845 199 A und EP 0 876 751 A.

Der Erfindung liegt die Aufgabe zugrunde, einen geschleppten Kreiselschwader der eingangs genannten Art zu schaffen, mit dem zumindest am Feldrand eine effizientere Recharbeit möglich ist als mit den bekannten.

Die gestellte Aufgabe wird mit den Merkmalen des Anspruchs 1 gelöst.

Da sich der erste Rechkreisel mittels der Zwangsverstellvorrichtung so weit relativ zur Mittellängsachse des Traktors seitlich versetzen lässt, dass seine Zinkenumlaufbahn über eine Traktorradspur hinausgreift, wird insbesondere am Feldrand auch dann effizient gearbeitet, wenn Hindernisse vorliegen sollten. Der Traktor fährt dann in ausreichendem Abstand vom Feldrand. Der erste Rechkreisel recht bis zum oder über den Feldrand hinaus und fördert Erntegut vom Feldrand einwärts zum zweiten Rechkreisel, der das übergebene Erntegut mit dem von ihm aufgenommenen Erntegut in den Vollschwad bringt. Der Vollschwad ist gut beispielsweise durch eine Ballenpresse weiterverarbeitbar. Die Effizienz der Recharbeit ist auch auf dem Feld hoch, weil sich mittels der Zwangsverstellvorrichtung der erste Rechkreisel so weit relativ zur Längsmittelachse des Traktors seitlich versetzt schleppen lässt, dass der Traktor mit einer Radspur auf einem bereits gesäuberten Bodenstreifen fährt. Auch hierbei wird ein Vollschwad gebildet. Die Gefahr, ins Erdreich gedrücktes Erntegut nicht zu rechen oder Erntegut mit Erdreich zu verschmutzen, ist somit halbiert. Gegebenenfalls lässt sich der erste Rechkreisel sogar so weit zur Seite versetzen, dass beide Traktorradspuren im sauberen Feldstreifen geformt werden. Aber auch andere Zwischen-Vollschwad-Arbeitsstellungen lassen sich mittels der Zwangsverstellvorrichtung für den ersten Rechkreisel einstellen, so dass die Einsatzbreite des geschleppten Kreiselschwaders erheblich erweitert ist. Natürlich können, falls gewünscht, auch zwei Einzelschwade gebildet werden. Die Zwangsverstellvorrichtung für den ersten Rechkreisel ist auch zweckmäßig, wenn zusätzlich zum zweiten Rechkreisel noch ein dritter oder sogar noch ein weiterer Rechkreisel vorgesehen sein sollte. Grundsätzlich kann, einerseits um am Feldrand effizient zu rechen, oder um die Verschmutzung des Ernteguts zu minimieren, die Zwangsverstellvorrichtung sogar bei einem geschleppten Kreiselschwader zweckmäßig sein, der nur mit einem großen Rechkreisel ausgestattet ist. Selbstverständlich sind die Rechkreisel-Zinken so gesteuert, dass sich in jeder Arbeitsposition ein optimales Rechbild ergibt. Die Zwangsverstellvorrichtung führt ferner zu dem wichtigen Vorteil einer maximalen Arbeitsbreite in der Einzelschwad-Position entsprechend der Summe der Durchmesser der Zinkenumlaufbahnen der Rechkreisel, ohne den Zugbalken des zweiten Rechkreisels überlang ausbilden zu müssen. Denn der erste Rechkreisel lässt sich soweit zur Seite verlegen, bis keine Überlappung mehr gegeben ist. Die Einzelschwade haben untereinander gleiche Breite und im Wesentlichen gleiche Füllungsgrade.

In der Feldrand-Vollschwad-Arbeitsposition ist es zweckmäßig, wenn die Zinkenumlaufbahn des ersten Rechkreisels seitlich über die eine Fahrspur des Traktors nach außen bis zum Feldrand greift, während dieselbe Zinkenumlaufbahn innen zwischen den Traktorradspuren einen Abstand zur anderen Traktorradspur einhält. Hingegen ist der zweite Rechkreisel zur anderen Seite so versetzt, dass ein sauberer Vollschwad gebildet wird und seine Zinkenumlaufbahn über die andere Traktorradspur nach außen greift.

In der Feld-Vollschwad-Arbeitsposition sind beide Rechkreisel zur selben Seite relativ zur Längsmittelachse des Traktors so versetzt, dass zumindest eine Traktorradspur in einem bereits gesäuberten Feldstreifen liegt. Der zweite Rechkreisel kann dabei zweckmäßig vollständig außerhalb der beiden Traktorradspuren geschleppt werden.

Dieses Prinzip ist besonders zweckmäßig für einen geschleppten Kreiselschwader, dessen Rechkreisel-Zinkenumlaufbahnendurchmesser größer als das Außenmaß der Traktorradspuren ist. Der zweite Rechkreisel kann, wie dies bekannt ist, für eine höhere Rechleistung ausgelegt sein als der erste Rechkreisel.

Um dem Maschinenführer die Recharbeit so komfortabel zu machen wie möglich, ist es zweckmäßig, in der Zwangsverstellvorrichtung wenigstens einen Hydrozylinder vorzusehen, der sich vom Traktor aus nach Wunsch oder automatisch steuern lässt. Der Hydrozylinder stützt sich an einem Widerlager des Hauptzugbalkens ab und lenkt die Laufräder des ersten Rechkreisels so, dass dieser wie gewünscht zur Seite versetzt wird. Hierfür gibt es mehrere Möglichkeiten. Falls die Laufräder nicht lenkbar an einem Stützrahmen des Fahrwerks angeordnet sind, ist es zweckmäßig, den Stützrahmen mittels des Hydrozylinders zu verdrehen. Falls die Laufräder am Stützrahmen lenkbar angeordnet sind, kann es zweckmäßig sein, die Laufräder direkt mittels des Hydrozylinders entsprechend zu lenken. Falls die Laufräder nicht lenkbar am Stützrahmen und der Stützrahmen selbst unverdrehbar am Zugbalken oder am Getriebegehäuse des Rechkreisels angeordnet ist, ist es zweckmäßig, im Hauptzugbalken ein Knickgelenk vorzusehen, in welchem sich ein Hauptzugbalken-Endteil relativ zu dem zum Traktor verlaufenden Hauptzugbalken knicken lässt, um die Laufräder entsprechend zu lenken und gelenkt zu halten.

Wird der Stützrahmen des Fahrwerks verdreht, dann ist es zweckmäßig, den Stützrahmen mit einer die Kreiselachse definierenden Welle zu koppeln, an der der Hydrozylinder über einen Stellhebel angreift. Dies bietet den Vorteil, dass auch die Zinkensteuerkurve durch die Welle entsprechend mitverstellt werden kann.

Bei lenkbaren Laufrädern ist es zweckmäßig, eine die Kreiselachse definierende Welle drehbar durch das Getriebegehäuse zu führen und mit Lenkeinrichtungen der Laufräder zu koppeln, wobei der Hydrozylinder über einen Stellhebel an der Welle angreift und die Räderlenkstellung einstellt, und zweckmäßig auch die Zinkensteuerung entsprechend verstellt.

Falls der Hauptzugbalken einen abknickbaren Hauptzugbalken-Endteil hat, sollte das Knickgelenk zwischen der Kreiselachse und dem Zugpunkt für den Zugbalken des zweiten Rechkreisels positioniert sein, d.h., relativ nahe bei der Kreiselachse. Der Hydrozylinder greift dann an einem entsprechenden Widerlager des Hauptzugbalken-Endteils an, um dieses relativ zum Hauptzugbalken abzuknicken, bis die gewünschte Seitenversetzung des ersten Rechkreisels eingestellt ist.

Bei einer bevorzugten Ausführungsform weist das Fahrwerk des zweiten Rechkreisels lenkbare Laufräder auf, und ist zum Lenken der Laufräder eine automatische oder wahlweise aktivierbare Folgesteuerung vorgesehen. Die Laufräder des Fahrwerks des zweiten Rechkreisels können wie die Laufräder des Fahrwerks des ersten Rechkreisels gelenkt werden. Die Folgesteuerung dient dazu, dass der zweite Rechkreisel dem ersten Rechkreisel in einer exakt vorherbestimmbaren und wählbaren Bahn folgt, und zwar sowohl in der Transportposition bei Gerade- oder Kurvenfahrt, oder in einer Arbeitsposition bei Gerade- oder Kurvenfahrt. Diese Folgesteuerung gestattet es, in scharfen Kurven leichter zu wenden, beispielsweise beim Einfahren in das Feld oder am Vorgelände, und erleichtert es auch, Kurven rückwärts zu fahren. Ferner ist in der Vollschwad-Position die korrekte Überlappung zwischen den ersten und zweiten Rechkreiseln feiner einstellbar und einhaltbar. Dabei erfolgt die Lenkung der Laufräder des zweiten Rechkreisels z.B. gegensinnig zur Lenkrichtung des Traktors, d.h., bei nach rechts abbiegendem Traktor wird der zweite Rechkreisel nach links seitlich verfahren. In der Einzelschwad-Position werden die Rechkreisel im Wesentlichen ohne Überlappung und deshalb mit maximal möglicher Arbeitsbreite gefahren, wobei sie gleichbreite Einzelschwade formen.

Hierbei ist es zweckmäßig, wenn die Folgesteuerung einen Lenkkommandogeber aufweist, der den relativen Knickwinkel entweder des Hauptzugbalkens zur Längsmittelachse des Traktors oder im Zugpunkt zwischen dem Hauptzugbalken und dem Zugbalken abgreift und in entsprechende Lenkkommandos umwandelt. Der Lenkkommandogeber kann beispielsweise einen Tasthebel aufweisen, der am Hauptzugbalken angeschlossen und an einer Referenzstelle am Schlepper angelenkt ist. Alternativ könnte dieser Tasthebel auch zwischen dem Zugbalken und dem Hauptzugbalken im Bereich des Zugpunktes vorgesehen sein. Der letztgenannten Lösung wird der Vorzug gegeben, weil die Anschlussverhältnisse am Traktor dadurch vereinfacht sind. Ferner kann es zweckmäßig sein, ein Stellglied beim Zugpunkt vorzusehen, um den Knickwinkel zwischen dem Hauptzugbalken und dem Zugbalken abgreifen, einstellen und festlegen zu können.

Schließlich ist eine Einzelschwad-Arbeitsposition vorteilhaft, in der mittels der Zwangsverstellvorrichtung der erste Rechkreisel und mittels seiner eigenen Lenkvorrichtung auch der zweite Rechkreisel mit abgewinkeltem Hauptzugbalken und gegensinnig abgewinkeltem Zugbalken jeweils soweit zur Seite versetzt sind, dass keine Überlappung mehr entsteht, sondern mit maximal möglicher Arbeitsbreite gleichbreite Einzelschwaden geformt werden. In jedem Einzelfall ist es zweckmäßig, den Zugpunkt relativ weit vor der Kreislachse des ersten Rechkreisels anzuordnen, auch im Hinblick auf dem günstige bzw. moderate Knickwinkel in den Gelenkwellensträngen.

Ausführungsformen des Erfindungsgegenstandes werden anhand der Zeichnungen beschrieben. Es zeigen:
- Fig. 1: eine Schemadraufsicht auf ein Gespann aus einem Traktor und einem geschleppten Kreiselschwader, in Transportposition,
- Fig. 2: eine Schemadraufsicht auf das Gespann in einer Feldrand-Doppelschwad-Arbeitsposition,
- Fig. 3: eine Schemadraufsicht des Gespanns in einer Feld-Doppelschwad-Arbeitsposition,
- Fig. 4: eine Detaildraufsicht zu einem ersten Rechkreisel mit einer Zwangsverstellvorrichtung,
- Fig. 5: eine Detaildraufsicht auf eine andere Ausführungsform eines ersten Rechkreisels,
- Fig. 6: eine Detaildraufsicht auf eine weitere Ausführungsform eines ersten Rechkreisels,
- Fig. 7: eine Schemadraufsicht auf das Gespann bei einer weiteren Ausführungsform mit einer Folgesteuerung zum Lenken des zweiten Rechkreisels, am Beispiel einer vom Traktor gefahrenen Rechtskurve, und
- Fig. 8: das Gespann in einer optimalen Einzelschwad-Position.

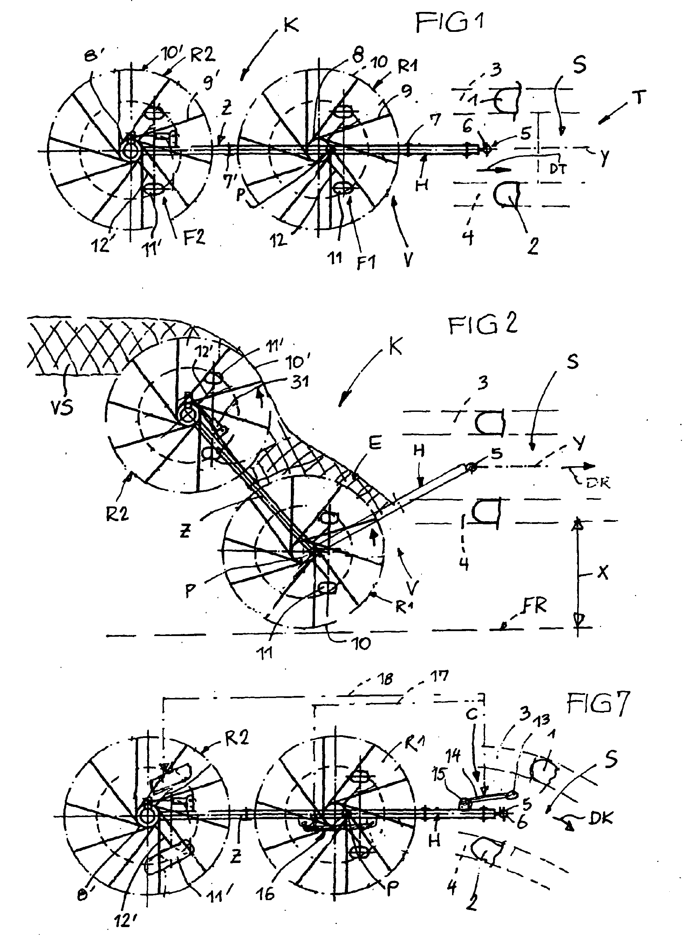

Ein in Fig. 1 gezeigtes Gespann besteht aus einem Traktor S und einem geschlepptem Kreiselmäher K, der in Fig. 1 in der Transportstellung T gezeigt ist und vom Traktor S in einer Transportrichtung DT geschleppt wird (Geradeausfahrt). Der Traktor S fährt mit seinen Hinterrädern 1, 2 (und den nicht gezeigten Vorderrädern) in Traktorradspuren 3, 4. An einer Schleppvorrichtung 5 des Traktors S ist mit einem Schleppanschluss 6 ein Hauptzugbalken H des Kreiselschwaders K zumindest seitlich schwenkbar angeschlossen. Der Hauptzugbalken H enthält ein Knickgelenk 7 mit in etwa bodenparalleler Knickachse und ist an ein Getriebegehäuse 8 eines ersten Rechkreisels R1 angeschlossen, dessen Zinken 9 eine Zinkenumlaufbahn 10 definieren. Die Zinken 9 sind mit einer nicht gezeigten Zinkensteuervorrichtung steuerbar. Der erste Rechkreisel R1 besitzt ein eigenes Fahrwerk F1 mit einem beispielsweise mit dem Getriebegehäuse 8 verbundenen Stützrahmen 12, an dem mehrere Laufräder 11 angeordnet sind. In der gezeigten Ausführungsform sind nur zwei Laufräder 11 gezeigt, es könnten jedoch auch mehr als zwei Laufräder vorgesehen sein.

In einem zwischen dem Getriebegehäuse 8 und dem Knickgelenk 7 positionierten Zugpunkt P ist ein Zugbalken Z für einen zweiten Rechkreisel R2 um eine in etwa zum Boden vertikale Achse schwenkbar angelenkt. Auch der Zugbalken Z enthält wenigstens ein Knickgelenk 7' mit in etwa bodenparalleler Knickachse und ist mit dem Getriebegehäuse 8' des zweiten Rechkreisels R2 verbunden. Die Zinken 9' des zweiten Rechkreisels R2 definieren eine Zinkenumlaufbahn 10', deren Durchmesser gleich oder verschieden von dem Durchmesser der Zinkenumlaufbahn 10 sein kann. Auch die Zinken 9' werden gesteuert. Der zweite Rechkreisel R2 weist einen Stützrahmen 12' für Bodenlaufräder 11' auf, die zu dem Fahrwerk F2 gehören.

Bei dem in Fig. 1 gezeigten Kreiselschwader sind die Durchmesser der Zinkenumlaufbahnen 10, 10' größer als das Außenmaß der Traktorradspuren 3, 4. In der Transportposition erstrecken sich die Zugbalken H, Z in etwa in Verlängerung der Längsmittelachse des Traktors S. Zumindest für den ersten Rechkreisel R1 ist eine Zwangsverstellvorrichtung V vorgesehen, mit der sich der erste Rechkreisel R1 relativ zur Längsmittelachse Y des Traktors S zur einen oder zur anderen Seite versetzen lässt.

Fig. 2 zeigt das Gespann in einer Feldrand-Vollschwad-Arbeitsposition. Der Traktor S fährt in einer Richtung DR in etwa parallel zu einem Feldrand FR, wobei zwischen der Traktorradspur 4 und dem Feldrand FR ein "sicherer" Querabstand X eingehalten wird. Der erste Rechkreisel R1 ist relativ zur Längsmittelachse Y des Traktors S zur Seite des Feldrandes FR versetzt, derart, dass die Zinkenumlaufbahn 10 bis nahe an den, an den, oder über den Feldrand FR greift. Innenseitig hält die Zinkenumlaufbahn 10 von der anderen Traktorradspur 3 einen Abstand ein. Der Hauptzugbalken H ist entgegen dem Uhrzeigersinn verschwenkt. Diese seitwärts versetzte Position des ersten Rechkreisels R1 ist mittels der Zwangsverstellvorrichtung V dadurch eingestellt, dass die Laufräder 11 in der Fahrtrichtung DR zunächst nach rechts eingeschlagen wurden und dann (wie gezeigt) parallel zum Feldrand FR laufen.

Der zweite Rechkreisel R2 ist relativ zum ersten Rechkreisel R1 zur anderen Seite versetzt, derart, dass in Fahrtrichtung DR eine bestimmte Überlappung vorliegt und vom ersten Rechkreisel R1 aufgenommenes Erntegut an den zweiten Rechkreisel R2 übergeben und von diesem in einen Vollschwad VS eingebracht wird. Der zweite Rechkreisel R2 ist so weit zur Seite versetzt, dass seine Zinkenumlaufbahn 10' einen Abstand von der einen Traktorradspur 4 einhält, und über die andere Traktorradspur 3 nach außen greift. Der Zugbalken Z ist im Zugpunkt P im Uhrzeigersinn verschwenkt, und zwar durch beispielsweise einen entsprechenden Lenkvorgang an den Laufrädern 11', die beispielsweise mit ihrem Stützrahmen 12' gegen den Uhrzeigersinn um die Kreiselachse verdreht sind.

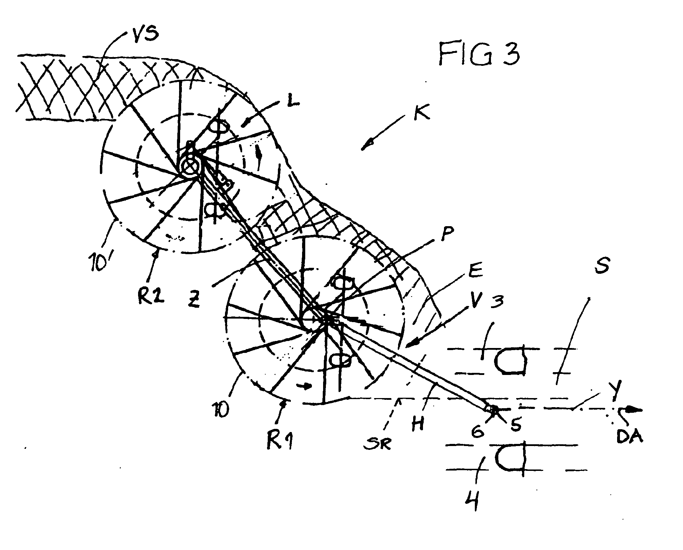

Fig. 3 verdeutlicht eine Feld-Vollschwad-Arbeitsposition des Gespanns. Der Traktor S fährt auf dem Feld in der Fahrtrichtung DA (Geradeausfahrt), und zwar derart, dass die Traktorradspur 3 auf dem Erntegut E und die andere Traktorradspur 4 auf einem bereits sauberen Feldstreifen läuft, d.h., ein Rand SR des sauberen Feldstreifens liegt zwischen den beiden Traktorradspuren 3, 4.

Der erste Rechkreisel R1 ist in Fahrtrichtung DA gesehen relativ zur Längsmittelachse Y des Traktors S so weit nach links versetzt, dass die Zinkenumlaufbahn 10 gerade den Rand SR überlappt, jedoch zur Traktorradspur 4 einen Abstand einhält. Außenseitig greift die Zinkenumlaufbahn 10 weit über die Traktorradspur 3 hinaus. Der Hauptzugbalken H ist an der Ankupplungsstelle 5 des Traktors S im Uhrzeigersinn verschwenkt. Diese seitlich versetzte Position ist eingestellt durch die Zwangsverstellvorrichtung V des ersten Rechkreisels R1.

Der zweite Rechkreisel R2 ist zur selben Seite wie der erste Rechkreisel R1 versetzt und fährt mit der erforderlichen Überlappung zum ersten Rechkreisel R1 vollständig außerhalb der Traktorradspuren 3, 4, um aus dem vom ersten Rechkreisel R1 aufgenommenen und übergebenen Erntegut und aus dem vom zweiten Rechkreisel R2 zusätzlich aufgenommenen Erntegut einen einzigen Vollschwad VS zu formen. Der Zugbalken Z des zweiten Rechkreisels R2 ist im Zugpunkt P im Uhrzeigersinn verschwenkt. Die seitlich versetzten Positionen beider Rechkreisel R1, R2 sind z.B. durch entsprechende Lenkvorgänge der Laufräder 11, 11' eingestellt und gehalten.

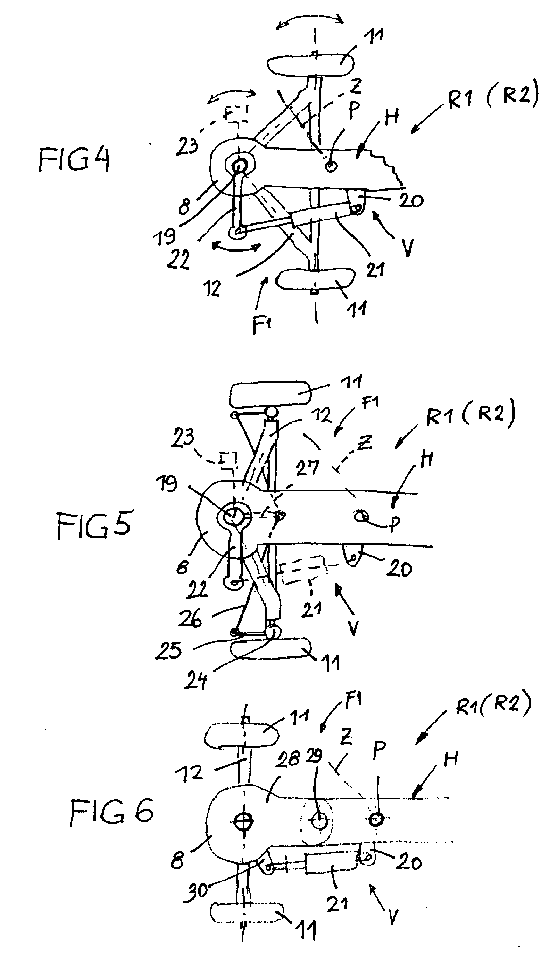

Die Fig. 4 bis 6 verdeutlichen verschiedene Ausführungsformen der Zwangsverstellvorrichtung V des ersten Rechkreisels R1, wobei die Zinken und die Zinkensteuervorrichtung der Klarheit wegen weggelassen sind.

In Fig. 4 ist in den Hauptzugbalken H das Getriebegehäuse 8 eingegliedert, das im Abstand vom Zugpunkt P für den Zugbalken Z liegt. Eine die Kreiselachse definierende Welle 19 durchsetzt das Getriebegehäuse und ist mit dem Stützrahmen 12 des Fahrwerks F1 drehfest verbunden. Der Stützrahmen 12 des Fahrwerks F1 haltert die Laufräder 11. Mit der Welle 19 ist ferner die nur schematisch angedeutete Zinkensteuervorrichtung 23 funktionell gekoppelt. An der Welle 19 ist ein Stellhebel 22 angebracht, an welchem ein Hydrozylinder 21 angreift, der sich an einem Widerlager 20 des Hauptzugbalkens H abstützt. Durch Beaufschlagen des zweckmäßig doppelseitig beaufschlagbaren Hydrozylinders 21 wird die Welle 19 über den Stellhebel 22 verdreht (Doppelpfeil). Diese Verdrehung wird auf den Stützrahmen 12 übertragen, um die Laufräder 11 zu lenken, und kann auch auf die Zinkensteuervorrichtung 23 übertragen werden.

Die Zwangsverstellvorrichtung in Fig. 5 unterscheidet sich von der von Fig. 4 dadurch, dass die Laufräder 11 am Stützrahmen 12 lenkbar angebracht sind (mit Lenkgelenken 24, Lenkhebeln 25 und Spurstangen 26). Der Stützrahmen 12 ist entweder mit dem Hauptzugbalken H oder dem Getriebegehäuse 8 fest verbunden. Die das Getriebegehäuse 8 von oben nach unten durchsetzende Welle 19 ist über einen Zwischenhebel 27 mit den Spurstangen 26 gekoppelt. Der Hydrozylinder 21, der sich am Widerlager 20 abstützt, greift am freien Ende des Stellhebels 22 an, um abhängig von der Beaufschlagung die Laufräder 11 zu lenken und in der gewählten Lenkstellung zu halten. Dabei kann auch die Zinkensteuerung 23 entsprechend verstellt werden.

In der Ausführungsform der Zwangsverstellvorrichtung V des ersten Rechkreisels R1 in Fig. 6 ist der Stützrahmen 12 der Laufräder 11 fest mit dem Getriebegehäuse 8 verbunden, das in einen Hauptzugbalken-Endteil 28 eingegliedert ist. Der Hauptzugbalken-Endteil 28 ist in einem Knickgelenk 29 mit dem Hauptzugbalken H abknickbar verbunden (Knickachse in etwa senkrecht zum Boden). Der Hydrozylinder 21, der sich am Hauptzugbalken H im Widerlager 20 abstützt, greift an einem Widerlager 30 des Hauptzugbalken-Endteils 28 bzw. des Getriebegehäuses 8 an. Das Knickgelenk 29 ist nahe bei der Kreiselachse bzw. zwischen der Kreiselachse und dem Zugpunkt P für den Zugbalken Z positioniert. Durch Abknicken des Hauptzugbalken-Endteils 28 relativ zum Hauptzugbalken H werden die Laufräder 11 gelenkt.

Bei einer weiteren, nicht gezeigten Ausführungsform ist der Hauptzugbalken H über einen Hydrozylinder, der sich direkt am Traktor S abstützt, in der Ankupplungsstelle 5 relativ zur Längsmittelachse Y des Traktors S verschwenkbar, um den ersten Rechkreisel R1 wie gewünscht seitlich zu verlagern und in ausgelenkter Position zu halten. Hier könnten die Laufräder wahlweise selbstlenkend angeordnet sein.

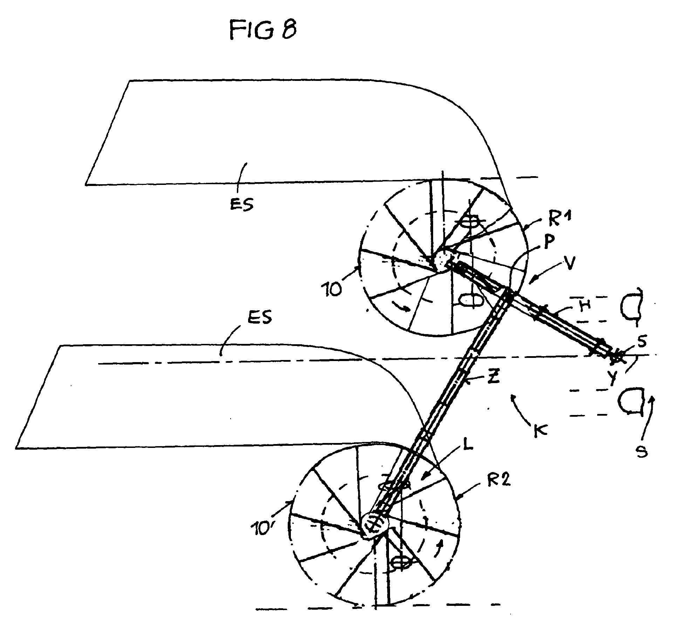

Um sowohl in der Transportposition beim Transport als auch in Arbeitspositionen und auch beim Manövrieren des Gespanns den zweiten Rechkreisel zwangsweise dem ersten Rechkreisel nachzuführen oder zu manipulieren, kann eine Folgesteuerung vorgesehen sein, um den zweiten Rechkreisel R2 wie gewünscht zu lenken. Dies sei anhand Fig. 7 erläutert.

Die Laufräder 11' des zweiten Rechkreisels R2 sind entweder direkt lenkbar (analog zu Fig. 5) oder über den Stützrahmen 12' (analog zu Fig. 4) bzw. mittels eines abknickbaren Zugbalken-Endteils (analog zu Fig. 6). Eine weitere Möglichkeit besteht darin, im Bereich des Zugpunktes P zwischen dem Hauptzugbalken H und dem Zugbalken Z einen Hydrozylinder 16 vorzusehen, mit dem ein gewünschter Knickwinkel einstellbar und haltbar ist. Die Folgesteuerung C weist einen Lenkkommandogeber 14 auf, der beispielsweise den Knickwinkel zwischen dem Hauptzugbalken H und dem Traktor S abgreift und in Lenkkommandos umwandelt. Dieser Lenkkommandogeber 14 kann ein Tasthebel sein, der sich verschwenkbar in einem Widerlager 15 am Hauptzugbalken H und ebenfalls verschwenkbar an einem Widerlager 13 des Traktors S abstützt, und zwar seitlich vom Schleppanschluss 6 des Hauptzugbalkens H. Das jeweilige Lenkkommando wird über eine Signalübertragung 18 an die Lenkvorrichtung beispielsweise der Laufräder 11' übertragen.

Fährt, wie in Fig. 7 gezeigt, der Traktor S eine Rechtskurve in der Richtung DK, dann werden die Laufräder 11' nach links ausgelenkt. Dies kann auch beim Rückwärtsfahren erfolgen. Alternativ oder additiv kann über eine Signalübertragung 17 das jeweilige Lenkkommando auch an den Hydrozylinder 16 übertragen werden, der den gewünschten Knickwinkel zwischen dem Hauptzugbalken H und dem Zugbalken Z einstellt.

Bei einer nicht gezeigten alternativen Ausführungsform ist der Lenkkommandogeber 14, z.B. ein Tasthebel, an der Position des Hydrozylinders 16 beim Zugpunkt P angeordnet, um den Knickwinkel zwischen dem Hauptzugbalken H und dem Zugbalken Z abzugreifen und in entsprechende Lenkkommandos umzuwandeln.

Ferner ist es möglich, dass der Maschinenführer im Traktor S selbst über ein entsprechendes Steuerventil ein Lenkkommando an die Laufräder 11' überträgt, um diese wie gewünscht zu lenken und den zweiten Rechkreisel R2 zu manövrieren. Der Hydrozylinder 16 könnte auch weggelassen werden, so dass sich der zweite Rechkreisel R2 nur durch Lenken seiner Laufräder 11' in die jeweils gewünschte Relativposition gegenüber dem ersten Rechkreisel R1 und/oder dem Traktor S einstellen lässt.

In Fig. 8 (optimale Einzelschwad-Position) sind die Zugbalken H, Z relativ zur Fahrtrichtung gegensinnig abgewinkelt, so dass die Rechkreisel R1, R2 gleichbreite Einzelschwade ES formen, ohne dass sich die Zinkenumlaufbahnen 10, 10' quer zur Fahrtrichtung nennenswert überlappen. Zu diesem Zweck hat die Zwangsverstellvorrichtung V den Hauptzugbalken H zur einen Seite der Längsmittelachse Y des Traktors S schräg gestellt (durch Lenken der Laufräder 11 des Rechkreisels R1), während die Lenkvorrichtung L des Rechkreisels R2 den Zugbalken Z zur anderen Seite schräg gestellt hat (durch Lenken dessen Laufräder 11'). Hierbei ist es vorteilhaft, wenn der Zugpunkt P möglichst weit vor der Kreiselachse des Rechkreisels R1 im Hauptzugbalken H platziert ist. Diese optimale Arbeitsbreite in der Einzelschwad-Position wird ohne überlangen Zugbalken Z erzielt, was der Transportlänge und der Manövrierbarkeit zugute kommt.

## Patentansprüche

1. Geschleppter Kreiselschwader (K) mit einem ersten und zumindest einem zweiten, je auf einem Fahrwerk (F1, F2) über Laufräder (11, 11') abgestützten Rechkreisel (R1, R2), wobei der erste Rechkreisel (R1) an einem einen Schleppanschluss (6) für den Traktor (S) aufweisenden Hauptzugbalken (H) angeordnet ist, und der zweite Rechkreisel (R2) an einem Zugbalken (Z) angeordnet ist, der in einem zwischen der Kreiselachse des ersten Rechkreisels und dem Schleppanschluss (6) am Hauptzugbalken (H) positionierten Zugpunkt (P) um eine zumindest annähernd vertikale Achse zumindest seitlich verschwenkbar angelenkt ist, und die Rechkreisel (R1, R2) aus einer Transportstellung, in der die Zugbalken (H, Z) und die Kreiselachsen innerhalb der beiden Traktorradspuren (3, 4) im Wesentlichen mit der Mittellängsachse (Y) des Traktors (S) ausgerichtet sind, in wenigstens eine Vollschwad-Arbeitsstellung einstellbar sind, in der der zweite Rechkreisel (R2) seitlich gegenüber dem ersten Rechkreisel (R1) versetzt ist und Erntegut (E) vom ersten Rechkreisel übernimmt, und in wenigstens eine Einzelschwad-Position einstellbar sind, in der jeder Rechkreisel (R1, R2) einen Einzelschwad (ES) formt, **dadurch gekennzeichnet, dass** der Kreiselschwader (K) eine Zwangsverstellvorrichtung (V) für den ersten Rechkreisel (R1) aufweist, mit der der erste Rechkreisel (R1) bei gegenüber dem ersten Rechkreisel (R1) seitlich versetztem zweiten Rechkreisel (R2) relativ zur Mittellängsachse (Y) des Traktors (S) und quer zur Arbeitsfahrtrichtung (DR, DA) seitlich in wenigstens eine Vollschwad-Arbeitsposition bringbar und in dieser haltbar ist, in der die Zinkenumlaufbahn (10) des ersten Rechkreisels (R1) außenseitig über eine Traktorradspur (3, 4) hinausgreift und innenseitig von der anderen Traktorradspur (4, 3) beabstandet ist.

2. Geschleppter Kreiselschwader nach Anspruch 1, **dadurch gekennzeichnet, dass** die Vollschwad-Arbeitsposition eine Feldrand-Vollschwad-Arbeitsposition ist, in der der zweite Rechkreisel (R2) relativ zum ersten Rechkreisel (R1) seitlich derart versetzt ist, dass die Zinkenumlaufbahn (10') des zweiten Rechkreisels (R2) von innerhalb der beiden Traktorradspuren (3, 4) an der den ersten Rechkreisel (R1) abgewandten Seite über die andere Traktorradspur nach außen greift.

3. Geschleppter Kreiselschwader nach Anspruch 1, **dadurch gekennzeichnet, dass** die Vollschwad-Arbeitsposition eine Feld-Vollschwad-Arbeitsposition ist, in der der zweite Rechkreisel (R2) relativ zum ersten Rechkreisel (R1) derart zur Seite versetzt ist, dass die Zinkenumlaufbahn (10') des zweiten Rechkreisels (R2) auf der Seite des ersten Rechkreisels (R1) vollständig außerhalb der beiden Traktorradspuren (3, 4) angeordnet ist.

4. Geschleppter Kreiselschwader nach Anspruch 1, **dadurch gekennzeichnet, dass** eine Einzelschwad-Arbeitsposition eine Feld-Einzelschwad-Position ist, in der die Rechkreisel (R1, R2) bei gegensinnig gegenüber der Fahrtrichtung abgewinkelten Zugbalken (H, Z) zumindest weitestgehend ohne Überlappung der Zinkenumlaufbahnen (10, 10') quer zur Fahrtrichtung angeordnet sind.

5. Geschleppter Kreiselschwader nach wenigstens einem der Ansprüche 1 bis 4, **dadurch gekennzeichnet, dass** der Durchmesser jeder Zinkenumlaufbahn (10, 10') größer ist als das quer zur Fahrtrichtung gemessene Außenmaß der beiden Traktorradspuren (3, 4).

6. Geschleppter Kreiselschwader nach Anspruch 1, **dadurch gekennzeichnet, dass** die Zwangsverstellvorrichtung (V) wenigstens einen Hydrozylinder (21) aufweist, der beim ersten Rechkreisel (R1) funktionell zwischen ein Widerlager (20) am Hauptzugbalken (H) und entweder einen die Laufräder (11) halternden Stützrahmen (12) des Fahrwerks (F1) oder den am Stützrahmen (12) lenkbar angeordneten Laufrädern (11) oder einen in der Nähe der Kreiselachse in einem Knickgelenk (29) knickbaren Hauptzugbalken-Endteil (28) eingeordnet ist.

7. Geschleppter Kreiselschwader nach Anspruch 6, **dadurch gekennzeichnet, dass** der die Laufräder (11) halternde Stützrahmen (12) des Fahrwerks (F1) mit einer die Kreiselachse des ersten Rechkreisels (R1) definierenden Welle (19) gekoppelt ist, und dass der Hydrozylinder (21) über einen Stellhebel (22) an der Welle (19) angreift.

8. Geschleppter Kreiselschwader nach Anspruch 6, **dadurch gekennzeichnet, dass** der die Laufräder (11) lenkbar abstützende Stützrahmen (12) des Fahrwerks (F1) mit einem Getriebegehäuse (8) des ersten Rechkreisels (R1) gekoppelt ist, dass eine die Kreiselachse definierende Welle (19) drehbar das Getriebegehäuse (8) durchsetzt, an der der Hydrozylinder (21) über einen Stellhebel (22) angreift, und dass Lenkeinrichtungen (25, 26, 27) der Laufräder (11) mit der Welle (19) gekoppelt sind.

9. Geschleppter Kreiselschwader nach Anspruch 6, **dadurch gekennzeichnet, dass** das Knickgelenk (29) im Hauptzugbalken (H) zwischen der Kreiselachse des ersten Rechkreisels (R1) und dem Zugpunkt (P) des Zugbalkens (Z) des zweiten Rechkreisels (R2) angeordnet ist und eine zumindest im Wesentlichen zur Kreiselachse parallele Knickachse definiert, und dass zumindest der die Laufräder (11) halternde Stützrahmen (12) des Fahrwerks (F1) mit dem Hauptzugbalken-Endteil (28) verbunden ist.

10. Geschleppter Kreiselschwader nach wenigstens einem der Ansprüche 1 bis 9, **dadurch gekennzeichnet, dass** das Fahrwerk (F2) des zweiten Rechkreisels (R2) direkt oder über einen verdrehbaren Stützrahmen (12') oder über einen knickbaren Zugbalken-Endteil oder über einen Hydrozylinder (16) beim Zugpunkt (P) lenkbare Laufräder (11') aufweist, und dass zum Lenken der Laufräder (11') des zweiten Rechkreisels (R2) in der Transport- und/oder jeder Arbeitsposition der Rechkreisel eine automatische oder eine wahlweise aktivierbare Folgesteuerung (C) vorgesehen ist.

11. Geschleppter Kreiselschwader nach Anspruch 10, **dadurch gekennzeichnet, dass** die Folgesteuerung (C) einen Lenkkommandogeber (14) aufweist, der den relativen Knickwinkel entweder zwischen dem Hauptzugbalken (H) und der Längsmittelachse (Y) des Schleppers (S) oder im Zugpunkt (P) zwischen dem Hauptzugbalken (H) und dem Zugbalken (Z) abgreift und daraus Lenkkommandos für die Laufräder (11') ableitet.

## Claims

1. Towed rotary swather (K) having a first and at least one second rotary raker (R1, R2), each supported on a chassis (F1, F2) via running wheels (11, 11'), the first rotary raker (R1) being disposed on a principal tie-bar (H), which has a towing connection (6) for the tractor (S), and the second rotary raker (R2) being disposed on a tie-bar (Z), which is articulated so as to be at least laterally pivotable about an at least approximately vertical axis at a towing point (P), positioned between the rotary axle of the first rotary raker (R1) and the towing connection (6) on the principal tie-bar (H), and the rotary rakers (R1, R2) being able to be set from a conveying position, in which the tie-bars (H, Z) and the rotary axles within the two tractor wheel tracks (3, 4) are aligned substantially with the central longitudinal axis (Y) of the tractor (S), into at least one full-swath working position, in which the second rotary raker (R2) is laterally offset from the first rotary raker (R1) and acquires harvested material (E) from the first rotary raker (R1), and said rotary rakers being able to be set into at least one single-swath position, in which each rotary raker (R1, R2) forms a single swath (ES), **characterised in that** the rotary swather (K) has a compulsory adjusting device (V) for the first rotary raker (R1), with which device the first rotary raker (R1), when the second rotary raker (R2) is laterally offset from the first rotary raker (R1), can be brought laterally into at least one full-swath working position relative to the central longitudinal axis (Y) of the tractor (S) and transversely relative to the working travel direction (DR, DA), and can be kept in this position, in which the tine circular path (10) of the first rotary raker (R1) extends externally beyond one tractor wheel track (3, 4), and is spaced internally from the other tractor wheel track (4, 3).

2. Towed rotary swather according to claim 1, **characterised in that** the full-swath working position is a field-edge full-swath working position, in which the second rotary raker (R2) is laterally offset relative to the first rotary raker (R1) in such a manner that the tine circular path (10') of the second rotary raker (R2) extends outwardly from within the two tractor wheel tracks (3, 4), at the side remote from the first rotary raker (R1), over the other tractor wheel track.

3. Towed rotary swather according to claim 1, **characterised in that** the full-swath working position is a field full-swath working position, in which the second rotary raker (R2) is offset sideways relative to the first rotary raker (R1) in such a manner that the tine circular path (10') of the second rotary raker (R2) is disposed on the side of the first rotary raker (R1) completely externally of the two tractor wheel tracks (3, 4).

4. Towed rotary swather according to claim 1, **characterised in that** a single-swath working position is a field single-swath position, in which the rotary rakers (R1, R2), when the tie-bars (H, Z) are angled in opposite directions relative to the travel direction, are disposed at least most substantially without overlapping the tine circular paths (10, 10') transversely relative to the travel direction.

5. Towed rotary swather according to at least one of claims 1 to 4, **characterised in that** the diameter of each tine circular path (10, 10') is larger than the external dimension of the two tractors wheel tracks (3, 4), measured transversely relative to the travel direction.

6. Towed rotary swather according to claim 1, **characterised in that** the compulsory adjusting device (V) has at least one hydraulic cylinder (21) which, in the case of the first rotary raker (R1), is installed operationally between a support (20) on the principal tie-bar (H) and either a supporting frame (12) of the chassis (F1), supporting the running wheels (11), or the running wheels (11), disposed in a steerable manner on the supporting frame (12), or a principal tie-bar end portion (28), yieldable in a flexible pivot joint (29) in the vicinity of the rotary axle.

7. Towed rotary swather according to claim 6, **characterised in that** the supporting frame (12) of the chassis (F1), retaining the running wheels (11), is coupled with a shaft (19) defining the rotary axle of the first rotary raker (R1), and **in that** the hydraulic cylinder (21) co-operates with the shaft (19) via an adjustable lever (22).

8. Towed rotary swather according to claim 6, **characterised in that** the supporting frame (12) of the chassis (F1), supporting the running wheels (11) in a steerable manner, is coupled with a transmission housing (8) of the first rotary raker (R1), **in that** a shaft (19), defining the rotary axle, rotatably traverses the transmission housing (8), with which shaft the hydraulic cylinder (21) co-operates via an adjustable lever (22), and **in that** steering arrangements (25, 26, 27) for the running wheels (11) are coupled with the shaft (19).

9. Towed rotary swather according to claim 6, **characterised in that** the flexible pivot joint (29) in the principal tie-bar (H) is disposed between the rotary axle of the first rotary raker (R1) and the towing point (P) of the second rotary raker (R2), and defines a flexible axle, which is at least substantially parallel to the rotary axle, and **in that** at least the supporting frame (12) of the chassis (F1), retaining the running wheels (11), is connected to the principal tie-bar end portion (28).

10. Towed rotary swather according to at least one of claims 1 to 9, **characterised in** the chassis (F2) of the second rotary raker (R2) has running wheels (11'), which are steerable directly or via a rotatable supporting frame (12') or via a yieldable tie-bar end portion or via a hydraulic cylinder (16) at the towing point (P), and **in that** an automatic or a selectively actuatable follow-up control (C) is provided for steering the running wheels (11') of the second rotary raker (R2) in the conveying position and/or in each working position of the rotary rakers.

11. Towed rotary swather according to claim 10, **characterised in that** the follow-up control (C) has a steering command transmitter (14), which picks-up the relative angle of curvature either between the principal tie-bar (H) and the central longitudinal axis (Y) of the tractor (S) or at the towing point (P) between the principal tie-bar (H) and the tie-bar (Z), and deduces therefrom steering commands for the running wheels (11').

## Revendications

1. Andaineuse rotative remorquée (K), comprenant un premier et au moins un deuxième râteaux rotatifs (R1, R2) prenant appui chacun sur un mécanisme de roulement (F1, F2) par le biais de roues mobiles (11, 11'), où le premier râteau rotatif (R1) est agencé sur une barre de direction générale (H) présentant un raccord de remorquage (6) pour le tracteur (S) et le deuxième râteau rotatif (R2) est agencé sur une barre de direction (Z) qui est articulée de façon basculante au moins latéralement autour d'un axe au moins sensiblement vertical à un point de direction (P) positionné sur la barre de direction générale (H) entre l'axe de rotation du premier râteau rotatif et le raccord de remorquage (6), et les râteaux rotatifs (R1, R2) peuvent être réglés depuis une position de transport, dans laquelle les barres de direction (H, Z) et les axes de rotation sont orientés à l'intérieur des deux traces de roues du tracteur (3, 4) sensiblement dans l'axe longitudinal médian (Y) du tracteur (S), dans au moins une position fonctionnelle d'andainage plein, dans laquelle le deuxième râteau rotatif (R2) est décalé latéralement par rapport au premier râteau rotatif (R1) et ramasse le produit de moissonnage (E) à la suite du premier râteau rotatif, et dans au moins une position d'andainage individuel, dans laquelle chaque râteau rotatif (R1, R2) forme un andain individuel (ES), **caractérisée en ce que** l'andaineuse rotative (K) présente un dispositif de réglage forcé (V) pour le premier râteau rotatif (R1), au moyen duquel, lorsque le deuxième râteau rotatif (R2) est décalé latéralement par rapport au premier râteau rotatif (R1), le premier râteau rotatif (R1) peut être amené latéralement dans au moins une position fonctionnelle d'andainage plein par rapport à l'axe longitudinal médian (Y) du tracteur (S) et transversalement à la direction de marche fonctionnelle (DR, DA) et peut être maintenu dans cette position, dans laquelle l'orbite des dents (10) du premier râteau rotatif (R1), du côté extérieur, s'étend au-delà d'une trace de roue du tracteur (3, 4), et du côté intérieur, se situe à distance de l'autre trace de roue du tracteur (4, 3).

2. Andaineuse rotative remorquée selon la revendication 1, **caractérisée en ce que** la position fonctionnelle d'andainage plein est une position fonctionnelle d'andainage plein de bord de champ, dans laquelle le deuxième râteau rotatif (R2) est décalé latéralement par rapport au premier râteau rotatif (R1) de telle sorte que l'orbite des dents (10') du deuxième râteau rotatif (R2) s'étend en direction de l'extérieur depuis l'intérieur des deux traces de roues du tracteur (3, 4) sur le côté opposé au premier râteau rotatif (R1) en passant par l'autre trace de roue du tracteur.

3. Andaineuse rotative remorquée selon la revendication 1, **caractérisée ce que** la position fonctionnelle d'andainage plein est une position fonctionnelle d'andainage plein de champ, dans laquelle le deuxième râteau rotatif (R2) est décalé latéralement par rapport au premier râteau rotatif (R1) de telle sorte que l'orbite des dents (10') du deuxième râteau rotatif (R2) sur le côté du premier râteau rotatif (R1) se situe entièrement à l'extérieur des deux traces de roues du tracteur (3, 4).

4. Andaineuse rotative remorquée selon la revendication 1, **caractérisée ce que** la position fonctionnelle d'andainage individuel est une position fonctionnelle d'andainage individuel de champ, dans laquelle, les barres de direction (H, Z) étant rabattues en sens contraire par rapport à la direction de roulage, les râteaux rotatifs (R1, R2) sont agencés au moins en majeure partie sans chevauchement des orbites des dents (10, 10') transversalement à la direction de roulage.

5. Andaineuse rotative remorquée selon au moins l'une des revendications 1 à 4, **caractérisée en ce que** le diamètre de chaque orbite des dents (10, 10') est supérieur à la dimension extérieure mesurée transversalement à la direction de roulage des deux traces de roues du tracteur (3, 4).

6. Andaineuse rotative remorquée selon la revendication 1, **caractérisée en ce que** le dispositif de réglage forcé (V) comprend au moins un cylindre hydraulique (21) qui est agencé pour le premier râteau rotatif (R1) de façon fonctionnelle entre une butée (20) sur la barre de direction principale (H) et soit un cadre d'appui (12) du mécanisme de roulement (F1) supportant les roues mobiles (11), soit les roues mobiles (11) agencées de façon dirigeable sur le cadre d'appui (12), soit une partie d'extrémité de la barre de direction principale (28) pouvant pivoter dans une articulation (29) à proximité de l'axe de rotation.

7. Andaineuse rotative remorquée selon la revendication 6, **caractérisée en ce que** le cadre d'appui (12) du mécanisme de roulement (F1) supportant les roues mobiles (11) est couplé à un arbre (19) définissant l'axe de rotation du premier râteau rotatif (R1) et **en ce que** le cylindre hydraulique (21) s'engage avec l'arbre (19) par le biais d'un levier de commande (22).

8. Andaineuse rotative remorquée selon la revendication 6, **caractérisée en ce que** le cadre d'appui (12) du mécanisme de roulement (F1) soutenant les roues mobiles (11) de façon dirigeable est couplé à un carter de protection des engrenages (8) du premier râteau rotatif (R1), **en ce qu'**un arbre (19) définissant l'axe de rotation, avec lequel le cylindre hydraulique (21) s'engage par le biais d'un levier de commande (22), traverse le carter de protection des engrenages (8) de façon rotative, et **en ce que** des dispositifs de direction (25, 26, 27) des roues mobiles (11) sont couplées à l'arbre (19).

9. Andaineuse rotative remorquée selon la revendication 6, **caractérisée en ce que** l'articulation (29) est agencée dans la barre de direction principale (H) entre l'axe de rotation du premier râteau rotatif (R1) et le point de direction (P) de la barre de direction (Z) du deuxième râteau rotatif (R2) et définit un axe de pivotement au moins sensiblement parallèle à l'axe de rotation et **en ce qu'**au moins le cadre d'appui (12) du mécanisme de roulement (F1) supportant les roues mobiles (11) est relié à la partie d'extrémité de la barre de direction principale (28).

10. Andaineuse rotative remorquée selon au moins l'une des revendications 1 à 9, **caractérisée en ce que** le mécanisme de roulement (F2) du deuxième râteau rotatif (R2) présente des roues mobiles dirigeables (11') au niveau du point de direction (P) directement ou par le biais d'un cadre d'appui tournant (12'), ou par le biais d'une partie d'extrémité articulée de la barre de direction, ou par le biais d'un cylindre hydraulique (16), et **en ce qu'**une commande à poursuite (C) automatique ou pouvant être activée au choix est prévue afin de diriger les roues mobiles (11') du deuxième râteau rotatif (R2) dans la position de transport et/ou chaque position fonctionnelle des râteaux rotatifs.

11. Andaineuse rotative remorquée selon la revendication 10, **caractérisée en ce que** la commande à poursuite (C) comprend un transmetteur d'ordres de guidage (14) qui saisit l'angle d'articulation relatif soit entre la barre de direction principale (H) et l'axe longitudinal médian (Y) de la remorque (S), soit au niveau du point de direction (P) entre la barre de direction principale (H) et la barre de direction (Z) et qui déduit à partir de celui-ci des ordres de guidage pour les roues mobiles (11').
